# EUROPÄISCHE PATENTSCHRIFT

(11) **EP 2 101 150 B1**
(45) Veröffentlichungstag und Bekanntmachung des Hinweises auf die Patenterteilung: **25.09.2013**
(21) Anmeldenummer: 09001603.1
(22) Anmeldetag: 05.02.2009
(51) Int. Cl.: G01C 21/34

(54) **Verfahren und Gerät zur dynamischen Navigation mit statischen Routendaten und Selektion dynamischer Daten**
Method and device for dynamic navigation with static route data and selection of dynamic data
Procédé et appareil de navigation dynamique à l'aide de données de route statiques et d'une sélection de données dynamiques

(30) Priorität: 10.03.2008 DE 102008013493
(43) Veröffentlichungstag der Anmeldung: 16.09.2009
(73) Patentinhaber: Deutsche Telekom AG, 53113 Bonn (DE)
(72) Erfinder: Fastenrath, Ulrich, Dr., 53121 Bonn (DE)
(74) Vertreter: Kewitz, Ansgar

(56) Entgegenhaltungen:
- EP-A2- 1 249 810
- US-A1- 2002 128 773
- US-A1- 2002 152 020
- US-A1- 2003 229 441

## Beschreibung

Die Erfindung betrifft ein Verfahren und entsprechendes Navigationsgerät zur interaktiven Navigation umfassend statische Routendaten zur Routenberechnung, deren Gewichtung zusätzlich durch dynamische Daten bestimmt wird. Ein solches Verfahren und Navigationsgerät sind beispielsweise aus der US 2002/0128773 bekannt.

### Überblick über die Erfindung:

Unter "dynamischer Navigation" wird im Kontext des straßengebundenen Individualverkehrs Navigation unter Berücksichtigung zeitlich veränderlicher Faktoren verstanden. An erster Stelle dieser Faktoren ist sicherlich die Verkehrslage zu nennen, aber auch andere verkehrsbeeinflussende Faktoren, wie das Wetter, der Straßenzustand oder Großereignisse sind relevant. Die Navigation kann dabei technisch verschiedenartig ausgeprägt sein: Sie kann in einem Endgerät ablaufen ("onboard-Navigation"), wobei das Endgerät mobil oder fest ins Fahrzeug eingebaut sein kann, oder in einer Zentrale ("offboard-Navigation"), wobei die berechneten Routen drahtlos ins Fahrzeug kommuniziert werden. Außerdem kann der Nutzer der Navigation verschiedene Aufgaben stellen bzw. Prioritäten setzen: Er kann nach der kürzesten, schnellsten, schönsten, risikoärmsten etc. Route verlangen. Allen diesen Ausprägungen der Navigation bzw. Routenberechnung ist gemeinsam, dass die o.g. zeitabhängigen Einflussfaktoren die zentralen Ergebnisse (wie die berechnete Route oder die erwartete Ankunftszeit) erheblich beeinflussen. Häufig führt dies dazu, dass dem Nutzer ungewohnte Routen vorgeschlagen werden. Da er nicht über die gleiche Information verfügt, wie die Zentrale, aus der die Routen beeinflussende Information stammt, fehlt ihm nicht selten das Vertrauen in die dynamisch berechnete Route. Leider ist es mit dem heutigen Stand der Technik nicht einfach, dem Nutzer eine Begründung für die dynamisch berechnete Route mitzuteilen. Dies kommt daher, dass im typischerweise gesamten Netz viele dynamische Ereignisse wie Verkehrsstörungen, Sperrungen oder Baustellen verteilt und für verschiedene Streckenabschnitte entweder straßenklassenabhängig oder sogar tageszeitabhangig variierende Geschwindigkeiten ("Ganglinien") hinterlegt sind, die alle zusammen eine dynamische "Kostenfunktion" oder einen "Streckenwiderstand" ausmachen, der Eingang in die Routenberechnung findet. Das Ergebnis des Routenbebechnungsalgorithmus ist eine Route, es bleibt jedoch völlig unklar, warum jetzt gerade die Route 1 gewählt wurde und vor einer Woche unter aus Nutzersicht ähnlichen Bedingungen (z. B. gleicher Abfahrtszeitpunkt, gleicher Wochentag, gleiches Ziel) eine andere Route 2. Die Routenberechnung beantwortet diese für den Nutzer Relevante, weil vertrauensbildende, Frage nicht.

Routenberechnung ist eine nichtlineare Operation, d. h. kleine Änderungen in den Eingangsgrößen (der Streckenwiderstände) können sprunghafte Änderungen der Ausgangsgröße (der berechneten Route) zur Folge haben. In solchen Situationen ist es schlechterdings unmöglich, durch "Rückwärtsrechnen" die Ursache für eine Änderung der Ausgangsgröße anzugeben. Aus der US 2003/0229441 ist eine Verfahren bekannt, dass bereichsweise Navigationsdaten von einem Server über ein Netzwerk herunterlädt und diese werden im Gerät des Benutzers korrigiert.

### Übersicht über die Erfindung:

Aufgabe der Erfindung ist, eine bessere Vermittlung der Navigationsentscheidungen des Navigationssystems an den Benutzer.

Gelöst wird diese Aufgabe durch eine Erfindung mit den Merkmalen der unabhängigen Ansprüche.

Insbesondere wird ein Verfahren zur dynamischen Navigation vorgeschlagen, welches durch Betrachtung mehrerer Netzzustände, alle bis auf einen hypothetisch, in der Lage ist, eine Begründung für die gewählte Route anzugeben, und diese an den Nutzer zu kommunizieren.

In der weiteren Ausgestaltung kann der Nutzer die angegebene Begründung akzeptieren oder ablehnen. Im zuletzt genannten Fall besteht eine einfache Möglichkeit für das Navigationsverfahren, eine neue Routenberechnung unter Nichtberücksichtigung der vom Nutzer als irrelevant eingestuften Ursache durchzuführen. (Es löscht die Ursache aus der Liste der routenbeeinflussenden Objekte und wiederholt die Berechnung.)

Eine weitere Verbesserung wird erreicht durch Kommunikation mit dem Nutzer über die als relevant (routenbeeinflussend) angenommenen Ursachen. Die an zentraler Stelle vorliegenden Informationen können als Ergebnis dieser Kommunikation verbessert werden.

Schwierigkeiten bei der Ursachenbeurteilung für nicht lineare Systeme erlebt man überall dort, wo Vorhersagen für Systeme zu treffen sind, welche durch nichtlineare Gleichungen beschrieben werden, z. B. bei der Wetter- oder Klimavorhersage. Um für solche Systeme den Zusammenhang von Ursache und Wirkung erfassen zu können, bedient man sich der sogenannten "Ensemblesimulation". Dabei wird eine Simulation eines zukünftigen Zustandes mehrfach durchgeführt, mit einem "Ensemble" verschiedener Anfangsbedingungen. Wenn für alle Mitglieder des Ensembles gleiche oder sehr ähnliche Ergebnisse herauskommen, so ist die Simulation stabil gegen Änderungen der Anfangsbedingungen und die Prognose ist recht sicher, gegeben die reale Anfangsbedingung liegt innerhalb des Ensembles. Durch Vergrößern des Ensembles der Anfangsbedingungen wird sich auch die Variabilität der Endzustände erhöhen, zuweilen dramatisch, nicht linear.

Beispielhaft: Durch Trennung der Anfangszustände, die zu einem Hurricane führen, von solchen, die das nicht tun, lässt sich die Ursache des Hurricanes eingrenzen.

Mit zunehmender Rechenleistung von Endgeräten (im Falle der onboard-Navigation) oder von zentralen Rechnern (im Falle der offboard-Navigation) lässt sich ein Analogon zur EnsembleSimulation auch für die dynamische Routenberechnung durchführen.

Während der Routenberechnung betrachtet das Verfahren eine große Menge von Netzkanten. An allen diesen Netzkanten ist ein, ggf. zeitabhängiger Wert der Kostenfunktion, z. B. der Reisezeit angeheftet. Erfindungsgemäß wird zusätzlich zur Kostenfunktion selbst für jede Netzkante ein Verweis auf das die Kostenfunktion (die Reisezeit) beeinflussende, dynamische Objekt hinterlegt. Dieses Objekt kann eine Ganglinie, eine Frühwarnung, eine Stau-, Baustellen-, Sperrungsmeldung etc. sein. Der Verweis kann fehlen, wenn keine dynamische Information vorliegt und mit statischer Information alleine, z. B. aus einer digitalen Karte gearbeitet wird. Mithilfe dieser Verweise konstruiert der Algorithmus im ersten Durchgang außer einer Route unter Berücksichtigung aller dynamischer Informationen auch eine Liste von potenziell Routen beeinflussenden Objekten. Diese Liste kann nach Abschluss der Routenberechnung nach Kriterien sortiert werden, wie dem absoluten oder relativen Einfluss auf die Kostenfunktion (die Reisezeit), nach der Länge des Ereignisses, nach der Art des Ereignisses oder Ähnlichem. Danach wird ein Ensemble von Anfangsbedingungen konstruiert durch Weglassen des ersten, dann des zweiten, ..., der beiden ersten, des ersten und dritten, ... Ereignisse aus der Liste der Routen beeinflussenden Objekte. Es wird sich herausstellen, dass die Route gegen Weglassen bestimmter Objekte stabil ist, gegen Weglassen anderer Objekte nicht. Anders ausgedrückt: Für ein Ensemble mit n Mitgliedern werden sich m verschiedene Routen ergeben mit m ≤ n. Objekte, die immer oder sehr häufig zu einer Route 1 führen, aber niemals zu einer Route 2, können als Ursache dafür angesehen werden, dass die Route 1 "besser" als Route 2 ist, insbesondere dann, wenn die Route 2 kürzer als die Route 1 sein sollte. Mit dieser Art von Begründung ausgestattet, werden Dialoge zwischen dem Navigationsgerät und dem Nutzer möglich.

Nicht unter die Erfindung fallende Vergleichsbeispiele:

### Beispiel 1: (nicht unter die Erfindung fallend)

Fahrt auf einer zuvor berechneten Route von Mannheim nach Köln NAVI: "Die Route wird aufgrund von Verkehrsmeldungen neu berechnet."

### kurz später

NAVI: "Die Route führt jetzt über die A3, da sich auf der A61 ein Unfall mit Vollsperrung ereignet hat."

### Beispiel 2: (nicht unter die Erfindung fallend)

Routenberechnung von Bonn nach Bad Hersfeld unmittelbar nach dem Einschalten NAVI: "Die Route wird berechnet."

kurz später

NAVI: "Die Route führt über Köln wegen einer Baustelle auf der B49, Länge 20km, Geschwindigkeitsbegrenzung 50km/h. Die Route ist 20 km länger, aber 15 Minuten schneller als eine. Route über Limburg. Möchten Sie die Baustelle umfahren?"
USER: "Nein" (Spracheingabe oder Knopf)
NAVI: "Eine Route über Limburg wird berechnet."

### Beispiel 3: (nicht unter die Erfindung fallend)

### Wie Beispiel 2, Stunden später bei Wetzlar

NAVI: "Wir befinden uns im Bereich einer gemeldeten Baustelle, Geschwindigkeitsbegrenzung 50km/h. Unsere Geschwindigkeit beträgt aber etwa 110km/h. Befindet sich hier eine Baustelle?" USER: "Nein"

NAVI: "Möchten Sie die Zentrale darüber informieren, dass die gemeldete Baustelle nicht mehr besteht?"

USER: "Ja"

NAVI: "Vielen Dank. Sie erhalten für Ihre Information eine Gutschrift von 2 Service-Meilen auf Ihrem Dienstekonto."

### Beispiel 4 : (nicht unter die Erfindung fallend)

Routenberechnung von Bonn nach Stuttgart unmittelbar nach dem Einschalten

NAVI: "Die Route wird berechnet."

kurz später

NAVI: "Die Route führt nicht über Karlsruhe. Die Route führt über Heilbronn. Freitags zwischen 15:00 und 17:00 beträgt die Stauwahrscheinlichkeit auf der A5 in südlicher Richtung wegen hohen Verkehrsaufkommens 85%. Möchten Sie über Heilbronn fahren?"

USER: "Ja"

### Bespiel 5: (nicht unter die Erfindung fallend)

Fahrt auf einer zuvor berechneten Route zum Flughafen München NAVI: "Die Route wird aufgrund von Verkehrsmeldungen neu berechnet."

kurz später

NAVI: "Die Route führt jetzt über die B388, da ich eine Frühwarnung für die A9 bei Kreuz Neufahrn erhalten habe. Die A9 ist noch frei, aber mit einer Wahrscheinlichkeit von 75% wird es innerhalb der nächsten 15 min. zum Stau kommen. Möchten Sie dieses Risiko eingehen?" USER: "Nein"

Das Beispiel 3, das nicht unter die Erfindung fällt, zeigt insbesondere, wie sich der Dialog mit dem Nutzer über die gewählte Route ausbauen lässt zur Verifikation von Beobachtungen zur Verkehrslage, die automatisch im Endgerät gemacht wurden ("FCD"), zur Falsifikation von Meldungen, die von der Zentrale kamen und als relevante Routen beeinflussende Objekte in die Routenberechnung eingingen oder auch nur zur Einholung des Einverständnisses des Nutzers, dass eine Information an die Zentrale geht.

### Figurenbeschreibung:

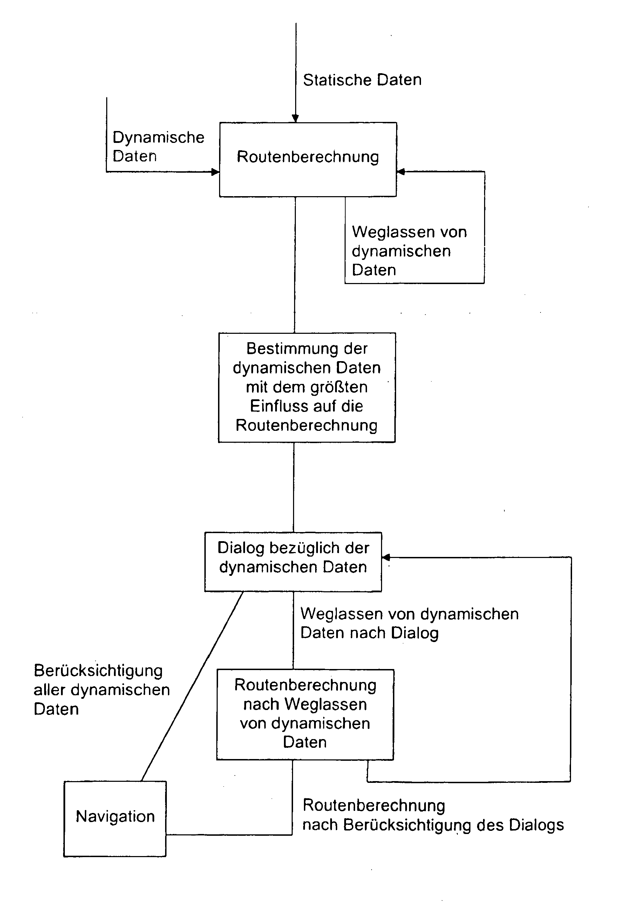

Die Figur 1 zeigt ein Ablaufdiagramm eines erfindungsgemäßen Verfahrens.

### Detaillierte Beschreibung der Figur:

In die Routenberechnung fließen im ersten Schritt sowohl statische Routendaten als auch dynamische ein. In einem iterativen Prozess werden nun alle bzw. viele Kombinationen von alternativen Routen unter Weglassen von dynamischen Informationen berechnet. Diese Menge von Routen wird nun analysiert, um die dynamischen Informationen zu bestimmen, die den größten Einfluss auf die Routenart haben. So kann ein Kriterium die Reisezeit sein, d. h. wenn eine spezifische dynamische Information berücksichtigt wird, so ist die Reisezeit immer oberhalb einer bestimmten Zeitschwelle oder auch die Art der Route selber bzw. deren Teilrouten. Im nächsten Schritt werden nun dem Benutzer in einem Dialog die dynamischen Daten sortiert nach ihrem Einfluss vorgelegt, sodass der Benutzer entscheiden kann, ob er die dynamischen Daten bei der Berechnung der Route berücksichtigen möchte oder nicht.

## Patentansprüche

1. Verfahren zur interaktiven Navigation umfassend statische Routendaten zur Routenberechnung, deren Gewichtung zusätzlich durch dynamische Daten bestimmt wird,
**dadurch gekennzeichnet**,
dass die Größe des Einflusses der dynamischen Daten auf die Routenberechnung durch eine Ensemblesimulation bestimmt wird, indem schrittweise dynamische Daten oder Kombinationen von dynamischen Daten nicht berücksichtigt werden, sodass diejenigen dynamischen Daten bestimmt werden, die am häufigsten oder am stärksten einen Einfluss auf eine abweichende Routenberechnung besitzen, und
die so selektierten dynamischen Daten interaktiv dem Benutzer zur Auswahl zur Verfügung gestellt werden, um interaktiv die Routenberechnung zu beeinflussen.

2. Das Verfahren nach dem vorhergehenden Anspruch, wobei die Routendaten digital als eine große Menge von Netzkanten dargestellt sind, an diesen Netzkanten ein Wert der Kostenfunktion angeheftet ist, wobei zusätzlich zur Kostenfunktion selbst für jede Netzkante ein Verweis auf die Kostenfunktion, vorzugsweise die Reisezeit, beeinflussende dynamische Objekte hinterlegt ist, wenn die Kostenfunktion dynamisch ist.

3. Das Verfahren nach dem vorhergehenden Anspruch, wobei ein dynamisches Objekt eine Ganglinie, eine Frühwarnung, eine Stau-, Baustellen- oder Sperrungsmeldung ist, das auf eine entsprechende Kostenfunktion verweist.

4. Das Verfahren nach einem oder mehreren der vorhergehenden Ansprüche 2 oder 3, wobei
- im ersten Schritt eine Route unter Berücksichtigung aller dynamischen Objekte berechnet wird;
- in dem weiteren Schritt werden immer wieder einzelne dynamische Objekte oder Kombinationen von dynamischen Objekten bei der Berechnung der Route nicht berücksichtigt, so dass eine Menge von berechneten Routen ermittelt wird,
- in einem weiteren Schritt werden auf der Basis der Menge - der berechneten Routen die dynamischen Objekte bestimmt, die einen starken Einfluss auf die Routenberechnung haben, wobei einen starken Einfluss diejenigen dynamische Objekte haben, die bei der Routenberechnung sehr häufig zu einer alternativen Route führen und/oder starke Abweichungen von der Fahrzeit verursachen.

5. Das Verfahren nach dem vorhergehenden Anspruch, wobei dem Benutzer in einem Dialog ein Hinweis auf die dynamischen Objekte mit dem stärksten Einfluss gegeben wird.

6. Das Verfahren nach dem vorhergehenden Anspruch, wobei dem Benutzer im Dialog die Möglichkeit gegeben wird, die Berücksichtigung der dynamischen Objekte bei der Routenberechnung zu aktivieren oder zu deaktivieren.

7. Das Verfahren nach einem oder mehreren der vorhergehenden Ansprüche 4 bis 6, wobei die dynamischen Objekte sortiert nach dem stärksten Einfluss im Dialog angezeigt werden, sodass dem Benutzer eine Auswahl von mehreren Dialogen zur Verfügung gestellt wird.

8. Das Verfahren nach dem vorhergehenden Anspruch, wobei das Kriterium der Sortierung durch den Benutzer bestimmbar ist.

9. Das Verfahren nach einem oder mehreren der vorhergehenden Ansprüche 2 bis 8, wobei die Plausibilität der dynamischen Objekte beim Durchfahren der Routenkante, dem das dynamische Objekt zugeordnet ist, überprüft wird, um bei fehlender Plausibilität in einem Dialog, diese zu korrigieren, um die so korrigierten Daten an eine zentrale Verkehrserfassungsstelle zu senden.

10. Navigationsgerät, dessen Routenberechnung interaktiv beeinflussbar ist, umfassend Zugriffsmittel auf statische Routendaten zur Routenberechnung, deren Gewichtung zusätzlich durch dynamische Daten bestimmt wird, umfassend Zugriffsmittel auf die dynamischen Daten, umfassend ein Rechenwerk und Mittel für einen Zugriff auf das Rechenwerk, **dadurch gekennzeichnet, dass** das Rechenwerk ausgebildet ist, um die Größe des Einflusses der dynamischen Daten auf die Routenberechnung durch eine Ensemblesimulation zu bestimmen, indem schrittweise dynamische Daten oder Kombinationen von dynamiscnen Daten nicht berücksichtigt werden so dass diejenigen dynamischen Daten bestimmt werden, die am häufigsten oder am stärksten einen Einfluss auf eine abweichende Routenberechnung besitzen, und das Navigationssystem ausgebildet ist, die so selektierten dynamischen Daten interaktiv dem Benutzer über eine Dialogeinheit zur Auswahl zur Verfügung zustellen, so dass über ein Eingabemittel interaktiv die Routenberechnung beeinflussbar ist.

11. Das Navigationsgerät nach dem vorhergehenden Anspruch, wobei die Routendaten als eine große Menge von Netzkanten auf einem internen oder externen Speicher abgelegt sind, an diesen Netzkanten ein Wert der Kostenfunktion angeheftet ist, wobei zusätzlich zur Kostenfunktion selbst für jede Netzkante ein Verweis auf ein die Kostenfunktion, vorzugsweise die Reisezeit, beeinflussendes dynamisches Objekt hinterlegt ist, wenn die Kostenfunktion dynamisch ist.

12. Das Navigationsgerät nach dem vorhergehenden Anspruch, wobei das dynamische Objekt eine Ganglinie, eine Frühwarnung, eine Stau-, Baustellen-, Sperrungsmeldung ist, das auf eine entsprechende Kostenfunktion verweist.

13. Das Navigationsgerät nach einem oder mehreren der vorhergehenden Ansprüche 11 bis 12, wobei das Rechenwerk eingerichtet ist, um
- in einem ersten Schritt eine Route unter Berücksichtigung aller dynamische Objekte zu berechnen;
- in den weiteren Schritten immer wieder einzelne dynamische Objekte oder Kombinationen von dynamischen Objekten bei der Berechnung der Route nicht zu berücksichtigen, so dass eine Menge von berechneten Routen ermittelt wird,
- in einem weiteren Schritt auf der Basis der Menge der berechneten Route die dynamischen Objekte zu bestimmen, die einen starken Einfluss auf die Routenberechnung haben, wobei einen starken Einfluss diejenigen dynamische Objekte haben, die bei der Routenberechnung sehr häufig zu einer alternativen Route und/oder zu einer langen Fahrzeit führen.

14. Das Navigationsgerät nach dem vorhergehenden Navigationsgerätanspruch, ausgebildet, um dem Benutzer über ein Dialoggerät ein Hinweis auf die dynamischen Objekte mit dem stärksten Einfluss auszugeben.

15. Das Navigationsgerät nach dem vorhergehenden Navigationsgerätanspruch, ausgebildet, um dem Benutzer im Dialog die Möglichkeit über ein Eingabemittel zu gegeben, die Berücksichtigung der dynamischen Objekte bei der Routenberechnung zu aktivieren oder zu deaktivieren.

16. Das Navigationsgerät nach einem oder mehreren der vorhergehenden Navigationsgerätansprüche 13 bis 15, ausgebildet, um die dynamischen Objekte sortiert nach dem stärksten Einfluss im Dialog anzuzeigen, sodass dem Benutzer eine Auswahl von mehreren Dialogen zur Verfügung gestellt wird.

17. Das Navigationsgerät nach einem oder mehreren der vorhergehenden Navigationsgeräteansprüche 11 bis 16, umfassend Mittel, die die Plausibilität der dynamischen Objekte beim Durchfahren der Routenkante, dem das dynamische Objekt zugeordnet ist, überprüfen, und bei fehlender Plausibilität in einem Dialog diese zu korrigieren, um die so ermittelten Daten an eine zentrale Verkehrserfassungsstelle zu senden.

## Claims

1. Method for Interactive navigation including static route data for route calculation, their weight is additionally determined by dynamic data,
**characterized in**
**that** the magnitude of the Influence of the dynamic data is determined in the route calculation by an ensemble simulation by stepwise not considering dynamic data or combinations of dynamic data, so that those dynamic data is determined, having the most common or strongest effect on an alternative route calculation and
the so selected dynamic data is interactively available to the user for a selection to interactively influence the route calculation.

2. The method of the preceding claim, wherein the route data are digitally represented as a large amount of network edges, to this network edges a value of the cost function is attached, wherein in addition to the cost function for each network edge a reference to the cost function, preferably the travel time affecting dynamic object, is stored when the cost function is dynamic.

3. The method according to the preceding claim, wherein a dynamic object is a time variation curve, an early warning, a traffic jam, construction site or stoppage message that refers to a corresponding cost function.

4. The method according to one or more of the preceding claims 2 or 3, wherein
- in the first step a route is calculated taking into account all dynamic objects;
- In the further step dynamic individual objects or combinations of dynamic objects will not be considered again and again in the calculation of the route, so that an amount of calculated routes is determined,
- In a further step, based on the amount of calculated routes, those dynamic objects are determined having a strong influence on the route calculation, wherein those dynamic objects have a strong influence, which lead very often to an alternative route and /or cause major deviations from the travel time when calculating the route

5. The method of the preceding claim, wherein the user is given an indication in a dialogue to those dynamic objects having the strongest influence.

6. The method according to the preceding claim, wherein the user is given the option in a dialogue to activate or deactivate the consideration of the dynamic objects in the route calculation.

7. The method according to one or more of the preceding claims 4 to 6, wherein the dynamic objects are sorted according to the strongest influence In the dialogue, so that a selection of a plurality of dialogues is provided.

8. The method of the preceding claim, wherein the sorting criteria is determined by the user.

9. The method according to one or more of the preceding claims 2 to 8, wherein the plausibility ofthe dynamic objects is checked while passing through the route edge, to which the dynamic object is assigned, in order to correct the plausibility In the absence of the same in a dialogue, to send the corrected data to a central traffic collection point.

10. Navigation device, of which the route calculation is interactively influenced, comprising access means to static route data for route calculation, their weight is also determined by dynamic data,
comprising access means to the dynamic data, comprising an arithmetic logic unit and means for accessing the arithmetic logic unit, **characterized by**
the arithmetic unit being configured to determine the magnitude of the Influence of the dynamic data on the route calculation by a ensemble simulation, wherein stepwise dynamic data or combinations of dynamic data are not considered, so that those dynamic data is determined having the most common or strongest influence on alternative route calculation,
and the navigation system is designed to provide those dynamic data interactively to the user via a dialogue unit for a selection, so that via input means the route calculation can be interactively influenced.

11. The navigation device according to the preceding claim, wherein the route data are stored as a large amount of network edges on an internal or external memory, to these network edges a value of the cost function is attached, wherein in addition to the cost function for each network edge a reference to the cost function, preferably the travel time affecting dynamic object, is stored when the cost function is dynamic.

12. The navigation device according to the preceding claim, wherein the dynamic object is a time variation curve, an early warning, a traffic jam, construction site or stoppage message that refers to a corresponding cost function.

13. The navigation device according to one or more ofthe preceding claims 11 to 12, wherein the calculating unit is designed to
- in a first step calculate a route taking into account all dynamic objects;
- In the further steps dynamic individual objects or combinations of dynamic objects will not be considered again and again In the calculation of the route, so that an amount of calculated routes is determined,
- In a further step, based on the amount of calculated routes those dynamic objects are determined having a strong Influence on the route calculation, wherein those dynamic objects have a strong influence, which lead very often to an alternative route and /or cause major deviations from the travel time when calculating the route

14. The navigation device according to the preceding claim navigation device, configured to output to the user via a dialogue device an indication of the dynamic objects with the strongest influence.

15. The navigation device according to the preceding claim navigation device, designed to give the user the option In a dialogue to activate or deactivate the consideration of the dynamic objects in the route calculation.

16. The navigation device according to one or more ofthe preceding claims 13 to 15, designed to sort the dynamic objects according to the strongest influence in the dialogue, so that a selection of a plurality of dialogues is provided.

17. The navigation device according to one or more ofthe preceding navigation device claims 11 to 16, including means checking the plausibility of the dynamic objects while passing through the route edge, to which the dynamic object is assigned, in order to correct the plausibility in the absence of the same in a dialogue, to send the data to a central traffic collection point.

## Revendications

1. Un procédé de navigation interactive à l'aide de données de route statique pour le calcul de route, leurs poids étant déterminés en outre par des données dynamiques ;
**caractérisé en ce que** le degré d'influence des données dynamiques est déterminé dans le calcul de route par une simulation globale en ne prenant pas en compte des données dynamiques successives ou des combinaisons de données dynamiques, de telle manière que ces données dynamiques sont déterminées avec l'effet le plus commun ou le plus important sur un calcul alternatif de route et les données dynamiques ainsi sélectionnées sont disponibles de manière interactive pour l'utilisateur pour une sélection devant influencer de manière interactive le calcul de route.

2. Le procédé de la revendication précédente, dans lequel les données de route sont représentées de manière numérique sous la forme d'un grand nombre de branches de réseau, auxquels se trouve attachée une valeur de fonction de coût, dans lequel en plus de la fonction de coût pour chaque branche de réseau, une référence à une fonction de coût, de préférence un objet dynamique affectant le temps de trajet, est stocké lorsque la fonction de coût est dynamique.

3. Le procédé selon la revendication précédente dans lequel un objet dynamique est une courbe de variation temporelle, une alerte préalable, un embouteillage, un chantier ou un message d'arrêt pointant ou se référant à une fonction de coût correspondante.

4. Le procédé selon l'une ou plusieurs des revendications précédentes 2 ou 3, dans lequel :
- lors de la première étape une route est calculée en tenant compte de tous les objets dynamiques;
- lors d'une étape supplémentaire des objets individuels dynamiques ou des combinaisons d'objets dynamiques ne seront pas considérés encore et encore lors du calcul de la route, de telle manière que l'on détermine un nombre de route calculées,
- lors d'une étape supplémentaire, sur la base d'un nombre de route calculées, ces objets dynamiques sont déterminés comme ayant une forte influence sur le calcul de la route, dans lequel ces objets dynamique ont une forte influence, conduisant très souvent à une route alternative et/ou entraîne une déviation significative par rapport au temps de trajet lors du calcul de la route.

5. Le procédé de la revendication précédente, dans lequel l'utilisateur reçoit une indication lors d'un dialogue concernant ces objets ayant l'influence la plus forte.

6. Le procédé selon la revendication précédente, dans lequel l'utilisateur reçoit une option lors d'un dialogue pour activer ou désactiver la prise en compte des objets dynamiques lors du calcul de route.

7. Le procédé selon l'une ou plusieurs des revendications précédentes 4 à 6 , dans lequel les objets dynamiques sont triés en fonction de la plus forte influence dans le dialogue, en sorte qu'une sélection de plusieurs dialogues est permise.

8. Le procédé de la revendication précédente, dans lequel le critère de tri est déterminé par l'utilisateur.

9. Le procédé selon l'une ou plusieurs des revendications précédentes 2 à 8, dans lequel la probabilité/vraisemblance des objets dynamiques est testée lors du passage au travers du bord de la route, auquel l'objet dynamique est affecté, de manière à corriger la vraisemblance en cas d'absence dans un dialogue, pour transmettre les données corrigées à un point de collecte de traffic central.

10. Dispositif de navigation, dont le calcul de route est sous influence interactive, comprenant :
des moyens d'accès à des données de route statique pour un calcul de route, leur poids étant également déterminés par des données dynamiques ;
comprenant des moyens d'accès aux données dynamiques, comprenant une unité logique arithmétique et des moyens pour accéder l'unité logique arithmétique, **caractérisé par le fait que**
l'unité arithmétique est configurée pour déterminer le degré d'influence des données dynamiques sur le calcul de la route au moyens d'une simulation globale, dans lequel les données dynamiques successives ou des combinaisons de données dynamiques ne sont pas prises en considérations, de façon à ce que ces données dynamiques sont déterminées avec l'influence la plus commune ou la plusieurs forte sur un calcul de route alternatif,
et le système de navigation est conçu pour fournir de manière interactive ces données dynamiques à un utilisateur via une unité de dialogue pour une sélection, de manière à permettre une influence interactive du calcul de route via des moyens de saisie.

11. Le dispositif de navigation selon la revendication précédente, dans lequel les données de route sont stockées dans une mémoire interne ou externe sous la forme d'un nombre important de branches de réseaux , auxquelles une valeur d'une fonction de coût est attachée, dans lequel en plus de la fonction de coût pour chacune des branches de réseau l'on stocke une référence à la fonction de coût lorsque la fonction de coût est dynamique, de préférence un objet dynamique affectant le temps de trajet.

12. Le dispositif de navigation selon la revendication précédente, dans lequel l'objet dynamique est une courbe de variation temporelle, une alerte préalable, un embouteillage, un chantier ou un message d'arrêt pointant ou se référant à une fonction de coût correspondante.

13. Le dispositif de navigation selon l'une ou plusieurs des revendications précédentes 11 à 12, dans lequel l'unité de calcul est conçue pour :
- calculer, lors de la première étape, une route est calculée en tenant compte de tous les objets dynamiques;
- ne pas tenir compte, lors d'une étape supplémentaire des objets individuels dynamiques ou des combinaisons d'objets dynamiques, dans le calcul de route, de telle manière que l'on détermine un nombre de route calculées,
- déterminer lors d'une étape supplémentaire, sur la base d'un nombre de route calculées, ces objets dynamiques présentant une forte influence sur le calcul de la route, dans lequel ces objets dynamique ont une forte influence, conduisant très souvent à une route alternative et/ou entraînant une déviation significative par rapport au temps de trajet lors du calcul de la route.

14. Le dispositif de navigation selon la revendication précédente, configurer pour transmettre à l'utilisateur, via un dispositif de dialogue, une indication lors d'un dialogue concernant ces objets ayant l'influence la plus forte.

15. Le dispositif de navigation selon la revendication précédente, conçu pour apporter à l'utilisateur une option lors d'un dialogue pour activer ou désactiver la prise en compte des objets dynamiques lors du calcul de route.

16. Le dispositif de navigation selon l'une ou plusieurs des revendications précédentes 13 à 15, conçu pour trier les objets dynamiques en fonction de la plus forte Influence dans le dialogue, en sorte qu'une sélection de plusieurs dialogues est permise.

17. Le dispositif de navigation selon l'une ou plusieurs des revendications précédentes 11 à 16, comportant des moyens pour tester la probabilité/vraisemblance des objets dynamiques lors du passage au travers de la branche de route, auquel l'objet dynamique est affecté, de manière à corriger la vraisemblance en cas d'absence dans un dialogue, pour transmettre les données corrigées à un point de collecte de traffic central.
